# EUROPEAN PATENT APPLICATION

(11) **EP 2 540 648 A1**
(43) Date of publication of application: **02.01.2013**
(21) Application number: 12466012.7
(22) Date of filing: 27.06.2012
(51) Int. Cl.: B65G 43/08, B65G 25/10

(54) **Method for adaptation of the output of the drive unit to the changing load and control system for the implementation of this method**

(30) Priority: 28.06.2011 CZ 20110385
(71) Applicant: Wista s.r.o., 763 02 Zlín, Louky (CZ)
(72) Inventor: Neuwirth, Jiri, 760 01 Zlin (CZ)
(74) Representative: Janik, Zdenek

(57) **Abstract**

The output of the drive unit (1) is controlled by stepping, whereby the determination of the input essential for the next step is done in one of the preceding steps, such that the period required by the moving part (12) of the drive unit (1) or moving part (751) of the equipment, which is mechanically connected to the moving part (12) of the drive unit (1), for change of position from one predefined position to another predefined position. In the case of a pneumatic drive unit (1), the input is controlled by regulation of the flow and/or selection of gas pressure. In case of hydraulic drive unit (1), the input is controlled by regulation of the hydraulic fluid flow and/or pressure of the hydraulic fluid acting on the drive unit and in case of an electric drive unit (1), its input is controlled by means of higher level or variation of the power supply voltage. When setting the input for the next step, it is possible in the case of the pneumatic and hydraulic drive units to also consider the pressure, at least, at one point of the supply pipe, ascertained in one of the previous steps and in the case of the electric drive unit, the electric resistance ascertained in one of the preceding steps. Drive unit (1) contains a moving part (12) and at least one input/output (13,14), which is connected via a regulating and/or switching element (61) connected to at least one energy source (91). The connection further concern the control unit (5) whose control output (55, 56) is connected to the control input (631, 632) of the regulating and/or switching element (61) and at least one sensor (71, 72) of the position for detection of the presence of at least two indicating points (19,39) or at least two sensors (71, 72) for detection of the presence of at least one indicating point (19), where the indication point is on the moving part (12) of the drive unit (1) or on the moving part (751) of the equipment (75), which is mechanically connected to the moving part (12) of the drive unit (1). The output (711, 721) of at least one position sensor (71, 72) is connected to the input (51,52) of the control unit (5). The energy source (91) may be a source of compressed gas, source of hydraulic fluid or electric power. The connection may further contain at least one pressure sensor (94, 96) connected to the control unit (5). Further the connection may contain at least one element for selection of energy source connected to the control unit (5).

## Description

### Technical field

The invention concerns adaptation of the output of the drive unit to the changing load by control of the input of the drive unit, which is used, for instance, to drive a rake conveyor or other equipment for transport of loose materials, or other equipment where under rising load at stable input, the output declines. The invention solves optimisation of equipment output by regulation of the input of the drive unit in relation to the momentarily required output for the purpose of saving energy and reducing wear of the moving components.

### Description of prior art

It is known, that upon increasing of load, equipment having the drive unit with constant input looses speed, if it has been used to drive. This is undesirable in most cases. This problem is solved in practice by increasing of equipment output by increasing its input.

It is further known that for linear motors, it is possible to deduce the average speed of the sliding component in a given section from the length of the time interval, which is necessary for changing of position of the sliding component of the linear motor in a given section. For equipment that contains rotary components, it is possible to ascertain the average speed, for instance, by reading the angle of rotation in a given time interval or by measuring the time essential for execution of the essential number of revolutions.

It is also known that in the branch of transport of loose materials, the vibration, screw, rake and belt conveyors are used, which have pneumatic, hydraulic or electric drive units. The drive units of known conveyors have stable output. The disadvantage of such conveyors is that during operation their actual state does not reflect their load. This results in a requirement for increasing of the quantity of the transported material to reduce the speed of the conveyor and thus reduce its output.

In plants where the transported volume changes substantially, the momentary overload of the conveyor may even lead to its failure. To prevent this, the conveyors are dimensioned for higher output so that they are also suitable for the highest possible load, which in standard operating conditions at lower loads results in incessant motion of the moving components. The consequence is higher energy consumption and excessive wear of the moving components.

### Disclosure of the invention

The given disadvantages are solved by the method for adaptation of the output of the drive unit to the changing load and connection to the implementation of this method according to the presented invention.

The essence of the method where the drive unit consists of a fixed part and moving part and is connected to an energy source, whereby the output of the drive unit is controlled in steps is, that for the purpose of ascertaining the load in a given step, time period required for changing position of the moving part of the drive unit or for changing position of moving part of the equipment, which is in mechanical contact with the moving part of the drive unit from one predefined position to the another predefined position is measured. Input for the drive unit required in the next step is determined according to the time period, ascertained in at least one preceding step. In the case of a pneumatically controlled drive unit, its input is controlled by regulation of the flow and/or by selection of pressure of driving gas, used for the pneumatically controlled drive unit. In case of the hydraulically controlled drive unit, its input is controlled by regulation of the flow of the hydraulic fluid and/or by pressure acting on the hydraulic fluid. In the case of a pneumatically or hydraulically controlled drive unit, it is alternatively possible to ascertained its load in a given step, the pressure of the gas or hydraulic fluid is also ascertained, at least at one point between the gas source or hydraulic fluid source and the piston of the drive unit, with advantage in the gas supply pipe before the input/output of the drive unit, whereby the input of the drive unit for the next step is also determined based on the pressure ascertained in the preceding step. According to the alternative with an electric motor, it is possible when ascertaining the load in a given step, the electric resistance of the electric motor is also ascertained, whereby the input of the electric motor for the next step is also set based on the electric resistance of the electric motor, which is ascertained in the preceding step.

The essence of the connection for adaptation of the output of the drive unit to changing load, where the drive unit consists of a fixed part and a moving part and at least one input/output, which is via a regulating and/or switching element connected to at least one energy source is that it further includes the control unit, whose control output is connected to the control input of the regulating and/or switching element. At least one sensor for indication of the presence of at least two indication points or at least two sensors for indication of the presence of at least one indication point, where at least one indication point is located on the moving part of the drive unit or on the moving part of the equipment, which is mechanically connected to the moving part of the drive unit. The output of at least one sensor of the indication point is connected to the input of the control unit. Alternatively the energy source is the source of compressed gas. According to another alternatives the energy source is the source of hydraulic fluid or source of electric power. Alternatively connection also contains at least one pressure sensor in the part of the pipe between the energy source and the input/output of the drive unit, whereby the pressure sensor is connected to the control unit. According to another alternative connection also contains at least one element for selection of energy source, which is connected between the regulating and/or switching element and at least two energy sources, whereby the output of the element for selection of energy source is connected to the input of the regulating or switching element that has at least one input is connected to output of at least one of two energy sources, whereby element for selection of energy source has a control input, connected to the appropriate control output of the control unit.

The advantage of the invention is that its usage saves energy. In the case of the rake conveyor, this energy saving is up to 50 %. A further advantage is reduction of the motion frequency of the moving parts, which reduces their wear. This is manifest in longer service life of the moving parts of the equipment.

### Description of the drawings

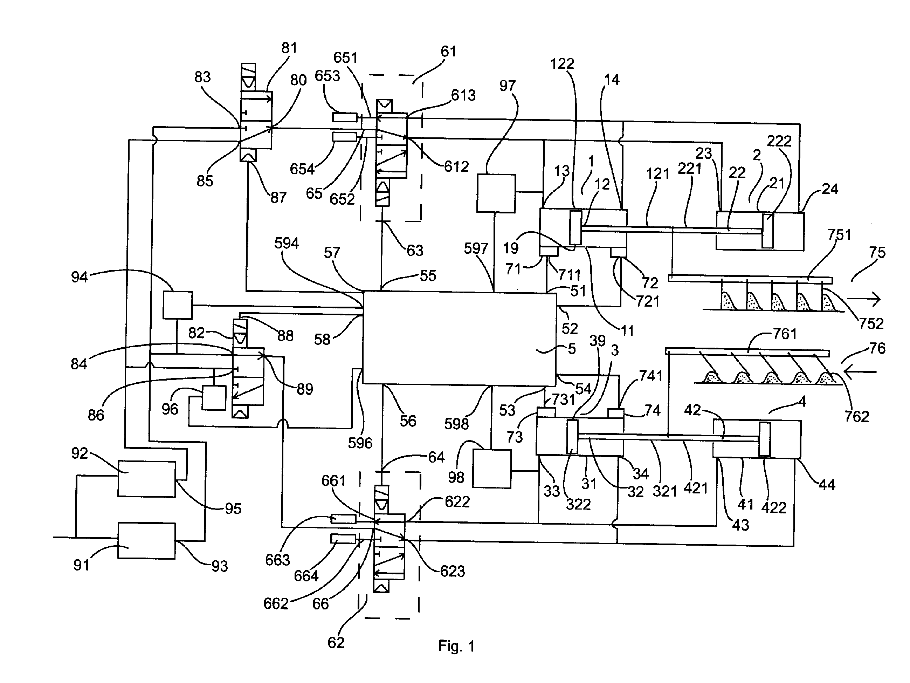

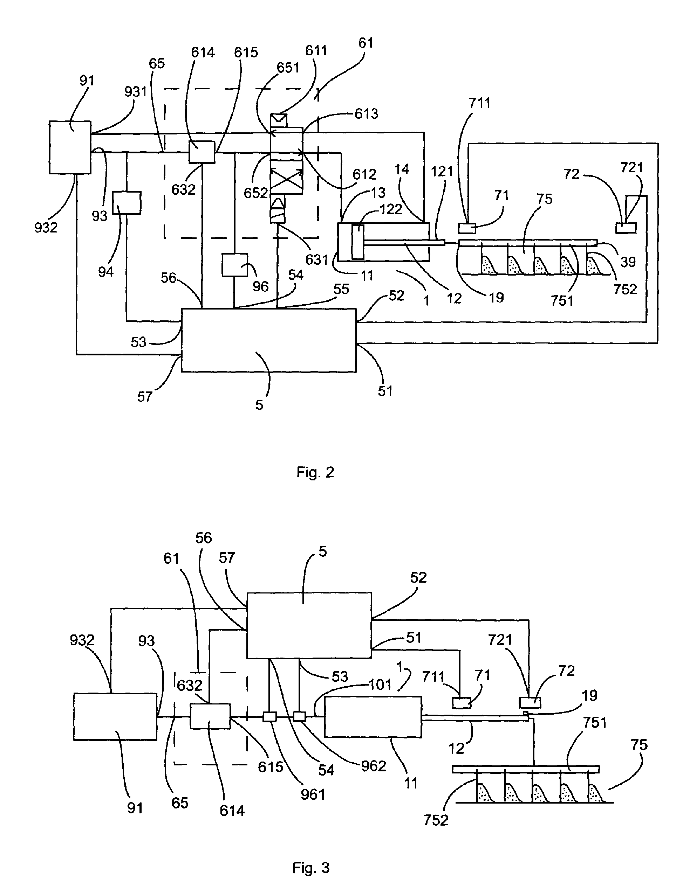

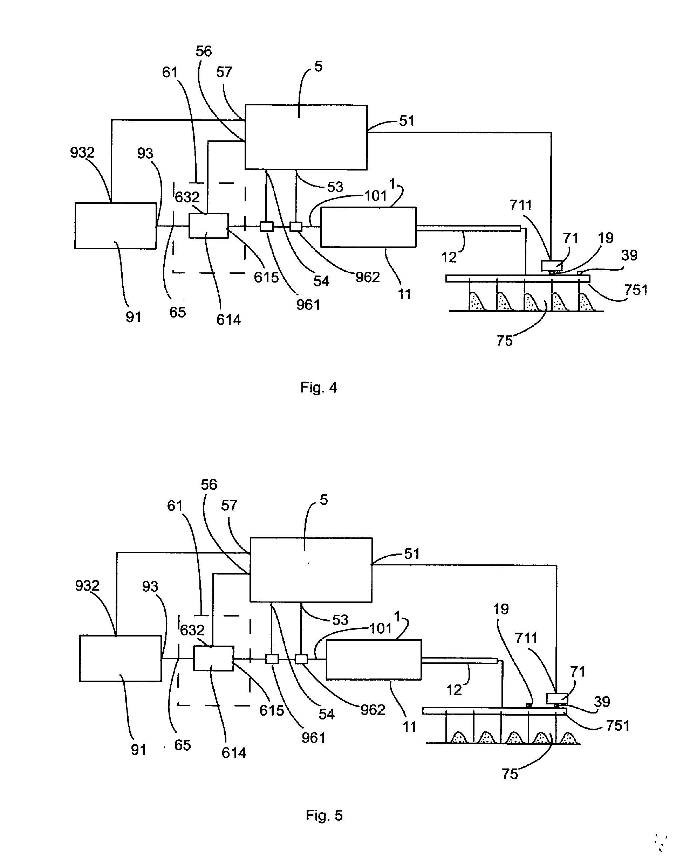

Figure 1 shows an embodiment according to example 1 in a state where the rakes of the first rake conveyor push the transported loose material over and the rakes of the second rake conveyor return to initial position. Figure 2 shows an embodiment according to example 2 and figure 3 shows an embodiment according to example 3. Figures 4 and 5 show an embodiment according to example 4, whereby figure 4 shows the presence of the first indication point indicated by the sensor and figure 5 shows the presence of the second indication point indicated by the sensor.

### Examples of embodiments

### Example 1

According to example 1 the connection for adaptation of the output of drive unit 1,2,3,4 to the changing loads is exercised at the station for cleaning of the surfaces of the abrasive blasted items. The station has two rake conveyors 75,76 for removal of used abrasive and released dirt being settled under the grille, which makes up the station. Rake conveyor 75,76 are driven by drive units 1,2,3,4. The rake conveyors 75,76 contain moving parts 751, 761 with suspended rakes 752, 762. The moving parts 751,761 of rake conveyors 75,76 are in mechanical contact with the moving parts 12,22,32,42 of drive units 1,2,3,4. The first rake conveyor 75 is driven by the first drive unit 1 and the second drive unit 2, which are opposite each other. The second rake conveyor 76 is driven by the third drive unit 3 and the fourth drive unit 4, which are also opposite each other. Each of the drive units 1,2,3,4 consists of a dual-action pneumatic linear motor having fixed part 11, 21, 31, 41 and moving part 12, 22, 32, 42. The moving part 12, 22, 32, 42 of each drive unit 1,2,3,4 consists of a piston 122, 222, 322, 422 and piston rod 121, 221, 321, 421. The fixed part 11, 21, 31, 41 of each drive unit 1,2,3,4 contains a pneumatic cylinder with two inputs/outputs 13, 14, 23, 24, 33, 34, 43, 44, whereby two inputs/outputs 13, 14, 23, 24, 33, 34, 43, 44, which are related to the same drive unit 1, 2, 3, 4 are found on opposite ends of the piston 122, 222, 322, 422 of the given drive unit 1, 2, 3, 4. The first and second drive unit 1,2 are mutually connected via their piston rods 121, 221. The piston rods 121, 221 of the first and second drive units 1, 2 are further connected with the moving part 751 of the first rake conveyor 75 with which it is mechanically connected. Also the third and fourth drive units 3,4 are connected by their piston rods 321, 421. The piston rods 321, 421 of the third and fourth drive units 3,4 are further connected with the moving part 761 of the second rake conveyor 76 with which they are mechanically connected. Pistons 122 and 322 of the first and third drive units 1,3 are magnetic. The magnetic part of piston 122 of the first drive unit 1 is the first indication point 19 for indication of the position of moving part 12 of the first drive unit and moving part 22 of the second drive unit 2. The magnetic part of piston 322 of the third drive unit 3 is the second indication point 39 for indication of the position of moving part 32 of the third drive unit 3 and moving part 42 of the fourth drive unit 4. The fixed parts 11, 31 of the first and third linear drive units 1, 3 are fitted by have sensors 71, 72, 73, 74. The first and the second sensors 71, 72 are used to indicate the presence of the first indication point 19. The third and the fourth sensors 73, 74 are used to indicate the presence of the second indication point 39. Each of the sensors 71. 72, 73, 74 of any of the indicating points 19,39 have output 711, 721, 731, 741 and according to this example consist of a magnetically controlled electric switch for detection of the presence of the magnetic piston near sensor 71, 72, 73, 74. The first sensor 71 is situated near the base of the cylinder, which is opposite to the base of the cylinder, which houses piston rod 121 of moving part 12 of the first linear drive 1. The second sensor 72 is on the opposite side of the cylinder near the base of the cylinder, which houses piston rod 121 of moving part 12 of the same linear drive 1. The third sensor 73 is near the base of the cylinder, which is opposite to the base of the cylinder, which houses piston rod 321 of moving part 32 of the third linear drive 3 and fourth sensor 74 is located on the opposite side of the same cylinder, close to the base of the cylinder, which houses piston rod 321 of moving part 32 of the third linear drive 3. The equipment further includes two energy sources 91,92. According to this example, compressed air energy is used. The first energy source 91 has an an output compressed air pressure of 0.2 MPa, the second energy source 92 has a an output compressed air pressure of 0.5 MPa. An integral part of the connection for control of the drive units 1,2,3,4 are also two elements 81,82 for selection of energy source 91,92, two regulating and/or switching elements 61,62, control unit 5 and four pressure sensors 94,96,97,98. The connections incorporate inputs/outputs 13,14,23,24,33,34,43,44 of the fixed parts of the drive units 1,2,3,4 through the regulating and/or switching elements 61,62 and through elements 81, 82 for selection of energy source 91, 92 connected to energy sources 91, 92. The first regulating and/or switching element 61 includes an input 65, two outputs 651, 652, two inputs/outputs 612,613 and control input 63. Input 65 of the first regulating and/or switching element 61 is connected through the first element 81 for selection of energy source 91, 92 to energy source 91,92. To both outputs 651,652 are connected noise dampeners 653,654, which dampen the noise from release of used air, to the atmosphere. The first input/output 612 of the first regulating and/or switching element 61 is connected to the first input/output 13 of the first drive unit 1 and the first input/output 23 of the second drive unit 2. The second input/output 613 of the first regulating and/or switching element 61 is connected to the second input/output 14 of the first drive unit 1 and the second input/output 24 of the second drive unit 2. The second regulating and/or switching element 62 includes input 66, two outputs 661, 662, two inputs/outputs 622,623 and control input 64. Input 66 of the first regulating and/or switching element 62 is connected through the second element 82 for selection of energy source 91, 92 to energy source 91,92. To both outputs 661,662 are connected noise dampeners 663,664, which dampen the noise from release of used air to the atmosphere. The first input/output 622 of the second regulating and/or switching element 62 is connected to the first input/output 33 of the third drive unit 3 and the first input/output 43 of the fourth drive unit 4. The second input/output 623 of the second regulating and/or switching element 62 is connected to the second input/output 34 of the third drive unit 3 and the second input/output 44 of the fourth drive unit 4. The first element 81 for selection of energy source 91, 92 is connected between the first regulating and/or switching element 61 and both energy sources 91,92 and the second element 81 for selection of energy source 91, 92 is connected between the second regulating and/or switching element 61 and both energy sources 91,92. Output 80 of the first element 81 for selection of energy source 91, 92 is connected to input 65 of the first regulating or switching element 61 and output 89 of the second element 82 for selection of energy source 91, 92 is connected to input 66 of the second regulating or switching element 62. The first input 83 of the first element 81 for selection of energy source 91, 92 and first input 84 of the second element 82 for selection of energy source 91, 92 are connected with output 93 of the first energy source 91 and the second input 85 of the first element 81 for selection of the energy source 91, 92 and second input 86 of the second element 82 for selection of the energy source 91, 92 are connected to the output 95 of the second energy source 92. The first element 81 for selection of the energy source 91,92 has a control input 87 and the second element 82 for selection of energy source 91,92 has a control input 88. The first pressure sensor 94 is located in the part of the pipe that connects output 93 of the first energy source 91 with the first input 84 of the second element 82 for selection of the energy source 91, 92 and with the first input 83 of the first element 81 for selection of the energy source 91, 92. The second pressure sensor 96 is located in the part of the pipe that connects output 95 of the second energy source 92 with the second input 86 of the second element 82 for selection of the energy source 91, 92 and with the second input 85 of the first element 81 for selection of the energy source 91, 92. The third pressure sensor 97 is located in that part of the pipe, which connects the first input 13 of the first drive unit 1 with the first regulating and/or switching element 61 and the fourth pressure sensor 98 is located in that part of the pipe that connects the first input/output 33 of the third drive unit 3 with the second regulating and/or switching element 62. All the pressure sensors 94,96,97,98 are further connected with control unit 5. Output 711 of the first sensor 71 of the first indicating point 19 is connected with the first input 51 of the control unit 5, output 721 of the second sensor 72 of the first indicating point 19 is connected with the second input 52 of the control unit 5. Output 731 of the third sensor 73 of the second indicating point 39 is connected with the third input 53 of the control unit 5 and output 741 of the fourth sensor 74 of the second indicating point 39 is connected with the fourth input 54 of the control unit 5. The first pressure sensor 94 is connected with the fifth input 594 of the control unit 5, the second pressure sensor 96 is connected with the sixth input 596 of the control unit 5, the third pressure sensor 97 is connected with the seventh input 597 of the control unit 5 and fourth pressure sensor 98 is connected with the eighth input 598 of the control unit 5. Control unit 5 further includes the first control output 55, connected with the control input 63 of the first regulating and/or switching element 61, second control output 56 connected with control input 64 of the second regulating and/or switching element 62, third control output 57 connected with the control input 87 of the first element 81 for selection of energy source 91,92 and fourth control output 58 connected with control input 88 of the second element 82 for selection of energy source 91,92.

The method according to this example is implemented on the equipment described above. When cleaning the surfaces of abrasive polished items, whereby the used abrasive, including dirt from the cleaned items falls through and collects on the rake conveyors 75,76, which are located under the grille forming the floor of the workstation. By return motion of the rakes 752,762, the used abrasive, including the dirt removed from the surface of the cleaned item is gradually moved on the bucket conveyor, which transports it for cleaning and recycling. The rakes 752,762 of each of the rake conveyors 75,76 are suspended on moving parts 751,761, which by back and the forth action of the moving parts 12,22,32,42 of drive units 1,2.3,4 move in linear back and forth motion to and from the bucket conveyor. The moving parts 751,761 of rake conveyors 75,76 moves concurrently moving parts 12,22,32,42 of the drive units 1,2,3,4 from one dead point to the next. Sensors 71,72,73,74 in the presence of magnetic pistons 122 and 322 are activated near them. Sensors 71,72,73,74 indicate presence of indication point 19,39 near the sensor 71,72,73,74. This information is transmitted to control unit 5, which measures and records the length of the time intervals between the individual cycles of pistons 122 and 322 through the terminal positions of moving parts 12,22,32,42 of drive units 1,2,3,4. The instantaneous speed of the raking action depends on the momentary load of the rake conveyor 75,76 and the momentary input of the drive unit 1,2,3,4. At constant power input of the drive unit 1,2,3,4, increasing of the volume of transported abrasive leads to increasing of load on the rake conveyor 75,76. This results to elongation of the time between the individual piston cycles, such that the output of the rake conveyor 75,76 declines. Control unit 5 controls the input of the drive units 1,2,3,4 in steps. As a variable, which serves to determine the essential input in the next step, the time essential for moving parts 12, 22, 32, 42 of the drive unit 1, 2, 3, 4 or moving part 75, 76 of the equipment, which is the moving part of the drive unit 1,2,3,4 in mechanical contact, for change of position from one predefined position to another predefined position is used. In this embodiment, this concerns moving parts 751,761 of rake conveyors 75,76. This time is the measure of the load of the rake conveyor 75,76 in the step of the actually running or in one of the preceding steps. One step may include both transition of the piston 122,322 from one dead centre to another, also the time interval for execution of several return motions of the rakes. If the sensors are not located at the dead centres, it is possible to monitor the time essential for partial shift of the pistons and in a case where the several sensors are installed on one drive unit, the piston motion from one dead centre to another can even entail several steps of the control unit. The input of drive units 1,2,3,4 can thus dynamically changed also within the framework of a single cycle. Control unit 5 controls the input of the drive units 1, 2. 3, 4 by control of direction and gas flow time at constant pressure at the input and gradual or alternating connection of the drive units to the gas sources with varying pressures at the outputs. The input can be controlled also by interruption of the gas supply to the drive units 1,2,3,4. When interrupting the gas supply to the drive units 1,2,3,4 in course of piston motion, the gas may expand and move pistons 122,222,322,422 until the pressure is balanced with the resistance, which the rake conveyor generates for the piston. For better control, data is also transmitted to the control units 5 about the momentary pressure in the individual parts of the piping, which is measured using pressure sensors 94,96,97,98. To determine the input of the drive unit 1. 2, 3, 4 for the next step, it is thus possible to use information about momentary pressures in the preceding step or also in course of the current step.

### Example 2

The connection according to this example differs from the connection described in example 1 in that it does not apply to equipment that has only one drive unit 1, which is a hydraulic linear drive, in that it has only one energy source 91, which is the source of hydraulic fluid, in that the regulating and/or switching element 61 consists of the actual regulating element 614, which regulates only the flow of the hydraulic fluid through the pipe and from the autonomous switching element 611, which determines the flow direction of the hydraulic fluid. Embodiment according to example 2 further differs from the embodiment described in example 1 in that the load ratio of the rake conveyor 75 is derived from the speed of the moving parts 751 of the rake conveyor 75. The drive unit 1 consists of a dual action hydraulic linear motor and contains fixed part 11 and moving part 12, which are made up of piston 122 and piston rod 121. The fixed part 11 of drive unit 1 contains a hydraulic cylinder with two inputs/outputs 13, 14, which are at opposite ends of the piston 122 of the drive unit 1. Piston rod 121 is connected to the moving part 751 of the rake conveyor 75. One of the edges of the moving part 751 of the rake conveyor 75 is the first indicating point 19 for indication of the position of the moving part 751 of the rake conveyor 75, while the opposite edge of the moving part 751 of the rake conveyor 75 is the second indicating point 39 for indication of the position of the moving part 751 of the rake conveyor 75. Close to the opposite ends of the moving part 751 of the rake conveyor 75 are sensors 71,72, whose mutual distance is larger than the distance of the opposite edges of the moving part 751 of the rake conveyor 75. The first position sensor 71 is used to indicate the presence of the first indication point 19 at first dead centre. The second position sensor 72 is used to indicate the presence of the second indication point 39 at second dead centre. Each of the sensors 71,72 has an output 711,721. Both sensors 71,72 are capable of detecting the presence of ferromagnetic metal in their vicinity. The equipment further contains one energy source 91, which is the source of hydraulic fluid. In the connection, the inputs/outputs 13,14 are fixed parts of drive unit 1 connected to energy source 91, via the regulating and/or switching element 61. The regulating and/or switching element 61 consist of the actual regulating element 614 and autonomous switching element 611. The switching element 611 contains input 652 and output 651, two inputs/outputs 612,613 and the control input 631. Input 65 of the first regulating and/or switching element 61 is connected to the output 93 of the energy source 91, in this case to the hydraulic fluid output. Output 651 of the switching element 611 is connected to the input 931 of energy source 91, in this case this concerns the input of the hydraulic fluid expelled from drive unit 1. The first input/output 612 of the switching element 611 is connected to the first input/output 13 of the control unit 1. The second output 613 of the switching element 611 is connected to the second input/output 14 of the drive unit 1. The first pressure sensor 94 is in the section of the pipe, which connects the output 93 of the energy source 91 to the input of the regulating element 614. The second pressure sensor 96 is in the section of the pipe, which connects the output 615 of the regulating element 614 to the input 652 of the switching element 611. Both pressure sensors 94,96 are further connected to control unit 5. The first pressure sensor 94 is connected to the third input 53 of the control unit 5 and second pressure sensor 96 is connected to the fourth input 54 of the control unit 5. Output 711 of the first sensor 71 of the first indicating point 19 is connected with the first input 51 of the control unit 5 and output 721 of the second sensor 72 of the second indicating point 39 is connected with the second input 52 of the control unit 5. Control unit 5 further contains the first control output 55, connected with control input 631 of the switching element 611, the second control output 56, connected with control input 632 of the regulating element 614 and the third control output 57 is connected with control input 932 of the energy source 91.

The method according to this example differs from the method described in example 1 in that instead of the possibility to regulate the input of the drive unit by switching between energy sources 91,92 with varying output pressure, there is a possibility here to regulate the input of the drive unit by means of hydraulic fluid flow and pressure. The moving part 751 of the rake conveyor 75 upon return motion alternately gets within reach of the first sensor 71 or the second sensor 72. Information about the presence of a moving part 751 of the rake conveyor 75 within detection of distance of sensor 71,72 is transmitted to the control unit 5, which measures the recorded time intervals between the individual passes of the moving part 751 of the rake conveyor 75 through the terminal positions. Also transmitted to the control unit 5 is information about the actual pressure in the hydraulic pipe before the input of the hydraulic fluid to the regulating element 614 and before the input to the switching element 611. This information is processed by control unit 5 identically as described in example 1. Control unit 5 controls the input of the drive unit in steps, as described in example 1, whereby it controls both the hydraulic fluid pressure and flow.

### Example 3

Connection according to example 3 differs from that described in example 2 in that drive unit 1 is a linear electric motor, regulating and/or switching element 61 consists of only one regulating element 614, which based on commands from control unit 5 controls the input of the drive unit by modification of the alternating current cycle and in that sensors 71 and 72 are optical and are located at the terminal ends of the moving part 12 of the drive unit 1, at which they confirm the presence or absence of the same indicating point 19. Between output 615 of regulating element 614 and an input 101 of the drive unit 11 there are an electric current sensor 961 and an electric voltage sensor 962. These sensors 961,962 are connected to control unit 5, which in the control of the drive unit 1 based on the duration of the time intervals between passage through the indicating point 19 between the first position sensor 71 and the second position sensor 72 consider the momentary electric resistance of the linear electric motor. Control unit 5 controls the input of the electric motor by regulating the size or frequency of the electric sinus current at the output of the energy source 91 and thus through regulating element 614 it modifies the current cycle in the individual periods.

### Example 4

Connection according to example 4 differs from the connection described in example 3 in that it contains only one position sensor 71, which is a mechanical sensor that indicates contact with the first or second projection on the moving part of the rake conveyor, where one of the projections is the first indicating point 19 and the second is the second indicating point 39. Evaluation of the load of the rake conveyor 75 based on the length of the time intervals between the individual passes of the moving parts of the rake conveyor 75 is analogous to what was described in the previous cases in that the difference when setting the required input for the next step also takes the momentary electric resistance of the linear electric motor into consideration.

### Industrial applicability

The invention can be applied to equipment that require guarantee of smooth operation even in conditions when they are exposed to varying loads, not only in cases where such equipment is equipped with linear drive units, but also in cases where rotary drives are used. The sensors used for indication of the position of the moving part, whose motion is detected may be, for instance, contact, magnetic or optical.

## Claims

1. The method for adaptation of the output of the drive unit to changing loads, where the drive unit consists of a fixed part and moving part and is connected to an energy source, whereby the output of the drive unit is controlled in steps, **characterized in that** for the purpose of ascertaining the load in a given step, time period required for changing position of the moving part (12, 22, 32, 42) of the drive unit (1, 2, 3, 4) or for changing position of moving part (751, 761) of the equipment (75,76), which is in mechanical contact with the moving part (12,22,32,42) of the drive unit (1,2,3,4) from one predefined position to the another predefined position is measured, whereby the input for the drive unit (1, 2, 3, 4) required in the next step is determined according to the time period, ascertained in at least one preceding step.

2. The method according to claim 1, **characterized in that** in case of a pneumatically controlled drive unit (1, 2, 3, 4), its input is controlled by regulation of the flow and/or selection of pressure of driving gas, used for the pneumatically controlled drive unit (1, 2, 3, 4).

3. The method according to claim 1, **characterized in that** in case of the hydraulically controlled drive unit (1, 2, 3, 4), its input is controlled by regulation of the flow of the hydraulic fluid and/or by pressure acting on the hydraulic fluid.

4. The method according to claims 1 and 2 or 1 and 3, **characterized in that** when ascertaining the load in a given step, the pressure of the gas or hydraulic fluid is also ascertained, at least at one point between the gas source (91,92) or hydraulic fluid source (91,92) and the piston (122,322) of the drive unit (1,2,3,4), with advantage in the gas supply pipe before the input/output (13,33) of the drive unit (1,2,3,4), whereby the input of the drive unit (1, 2, 3, 4) for the next step is also determined based on the pressure ascertained in the preceding step.

5. The method according to requirement 1 is **characterised in that** in a case where the drive unit (1) is an electric motor, when ascertaining the load in a given step, the electric resistance of the electric motor is also ascertained, whereby the input of the electric motor for the next step is also set based on the electric resistance of the electric motor, which is ascertained in the preceding step.

6. The connection for adaptation of the output of the drive unit (1,2,3,4) to changing load, where the drive unit (1,2,3,4) consists of a fixed part (11, 21, 31, 41) and a moving part (12, 22, 32, 42) and at least one input/output (13,14,23,24,33,34,43,44,101), which is via a regulating and/or switching element (61,62) connected to at least one energy source (91, 92), **characterized in that** it further includes the control unit (5) whose control output (55, 56) is connected to the control input (63, 64, 631, 632) of the regulating and/or switching element (61, 62) and at least one sensor (71, 72, 73, 74) for indication of the presence of at least two indication points (19,39) or at least two sensors (71, 72, 73, 74) for indication of the presence of at least one indication point (19), where at least one indication point (19) is located on the moving part (12, 22, 32, 42) of the drive unit (1, 2, 3, 4) or on the moving part (751, 761) of the equipment, which is mechanically connected to the moving part (12, 22, 32, 42) of the drive unit (1, 2, 3, 4), whereby the output (711, 721, 731, 741) of at least one sensor (71, 72, 73, 74) of the indication point (19,39) is connected to the input (51, 52, 53, 54) of the control unit (5).

7. The connections according to claim 6, **characterized in that** the energy source (91, 92) is the source of compressed gas.

8. The connections according to claim 6, **characterized in that** the energy source (91) is the source of hydraulic fluid.

9. The connections according to claim 6, **characterized in that** the energy source (91) is the source of electric power.

10. Connection according to claims 6 and 7 or 6 and 8, **characterized in that** it also contains at least one pressure sensor (94,96,97,98) in the part of the pipe between the energy source (91,92) and the input/output (13,14,23,24,33,34,43,44) of the drive unit (1,2,3,4), whereby the pressure sensor (94,96,97,98) is connected to the control unit (5).

11. Connection according to claim 5, **characterized in that** it also contains at least one element (81, 82) for selection of energy source (91, 92), which is connected between the regulating and/or switching element (61,62) and at least two energy sources (91,92), whereby the output (80,89) of the element (81, 82) for selection of energy source (91, 92) is connected to the input (65,66) of the regulating or switching element (61,62) that has at least one input (83,84, 85,86) is connected to output (93,95) of at least one of two energy sources (91,92), whereby element (81, 82) for selection of energy source (91, 92) has a control input (87, 88), connected to the appropriate control output (57, 58) of the control unit (5).
